(19) Europäisches Patentamt / European Patent Office / Office européen des brevets

(11) **EP 2 512 192 B1**

(12) **EUROPEAN PATENT SPECIFICATION**

(45) Date of publication and mention
of the grant of the patent:
**02.05.2018 Bulletin 2018/18**

(21) Application number: **10838588.1**

(22) Date of filing: **20.09.2010**

(51) Int Cl.:
*H04W 52/08* (2009.01)     *H04L 27/26* (2006.01)
*H04W 52/42* (2009.01)     *H04W 52/52* (2009.01)

(86) International application number:
**PCT/CN2010/077167**

(87) International publication number:
**WO 2011/076025 (30.06.2011 Gazette 2011/26)**

(54) **MULTI-CARRIER CLOSED-LOOP POWER CONTROL DEVICE AND METHOD**

MEHRTRÄGER STROMSTEUERVORRICHTUNG UND VERFAHREN IN EINEM GESCHLOSSENEN KREIS

APPAREIL ET PROCÉDÉ DE COMMANDE DE PUISSANCE EN BOUCLE FERMÉE DE PORTEUSES MULTIPLES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.12.2009   CN 200910258777**

(43) Date of publication of application:
**17.10.2012   Bulletin 2012/42**

(73) Proprietor: **ZTE Corporation**
**Shenzhen, Guangdong 518057 (CN)**

(72) Inventors:
• **LIU, Bing**
**Guangdong 518057 (CN)**
• **TAO, Jun**
**Guangdong 518057 (CN)**

(74) Representative: **V.O.**
**P.O. Box 87930**
**2508 DH Den Haag (NL)**

(56) References cited:
**EP-A1- 1 365 602     EP-A1- 1 793 509**
**WO-A1-00/01084     CN-A- 1 333 636**
**CN-A- 101 378 275     CN-A- 101 711 053**

## Description

### TECHNICAL FIELD

The disclosure relates to the field of mobile communications, and in particular to a multi-carrier closed-loop power control device and method.

### BACKGROUND

The maximum transmission power of a wireless base station in a Global System for Mobile Communications (thereinafter referred to as GSM for short) has to be controlled. Therefore, it is necessary to set a static power level for the base station, which determines a coverage area of the cell. After the static power level of the base station is set, interference to adjacent cells will be caused if the transmission power of the base station becomes larger, and the coverage area of the cell will become smaller if the transmission power becomes smaller. Additionally, most of the devices used in a radio frequency circuit are analog devices, the gain characteristic of which greatly depends on temperature and frequency. In view of the above, the transmission power of the base station has to be precisely controlled.

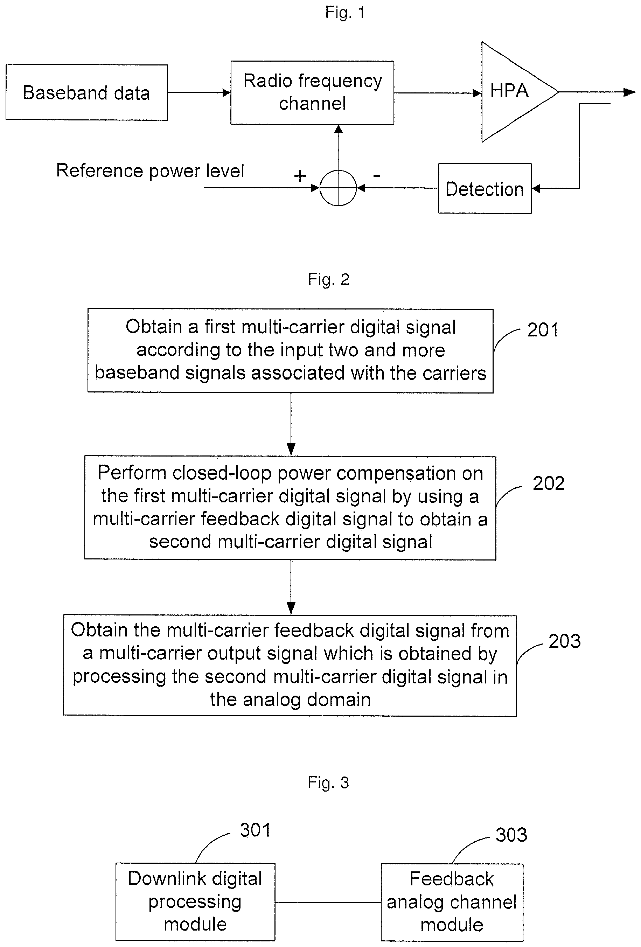

As shown in Fig. 1, in a traditional narrow band GSM base station, the closed-loop power control technique is generally employed to perform power control of a single carrier. For power control of a multi-carrier GSM base station, in a first existing approach, a closed-loop power control method similar to the narrow band is employed, in which each of the carrier signals is separated from coupled signals at an antenna and closed-loop power control is performed on each of the carrier signals, respectively. In a second existing approach, power control is directly performed on the multi-carrier signal, while feedback comparison and closed-loop power control are implemented at the analog part.

However, the inventor has found that following defects exist in the above technical solutions for the multi-carrier base station power control: in the first existing approach, each of the carrier signals has to be separated and subjected to closed-loop power control, respectively, which increases the processing complexity; while in the second existing approach, the feedback comparison and closed-loop power control are implemented in the analog part, and accordingly the characteristic of the analog devices has a great impact on performance of the closed-loop power control, which reduces precision of the power control.

WO 00/01084 A1 discloses a multi-carrier radio transmitter, in which, means for receiving and combining a plurality of carriers including a first modulated carrier for transmission in a first channel and a second modulated carrier for transmission in a second channel, to create a multi-carrier signal; power control means are arranged to individually vary the power of each of the plurality of carriers before combination.

### SUMMARY

The technical problem to be solved in the disclosure is to provide a multi-carrier closed-loop power control device and method and a base station, which can reduce complexity of wide band multi-carrier closed-loop power control and improve precision of the power control.

To solve the above technical problem, the embodiments of the disclosure provide the following technical solutions.

The disclosure provides a multi-carrier closed-loop power control device according to claim 1.

In the solution, the multi-carrier digital signal output sub-module includes:

digital up-converters, each corresponding to a respective one of the baseband signals associated with the carriers, configured to perform digital up-conversions on input two and more baseband signals associated with Global System for Mobile Communication (GSM) carriers;

a multiplier, configured to perform analog channel gain flatness compensation for each of the GSM carriers based on a GSM transmission compensation coefficient table;

an adder, configured to combine the compensated two and more baseband signals associated with the GSM carriers, so as to obtain the first multi-carrier digital signal.

In the solution, the multi-carrier digital signal output sub-module includes:

digital up-converters, each corresponding to a respective one of the baseband signals associated with the carriers, configured to perform digital up-conversions on input two and more baseband signals associated with Global System associated with Mobile Communication (GSM) carriers and two and more baseband signals associated with Universal Mobile Telecommunication System (UMTS) carriers, respectively;

a multiplier, configured to perform analog channel gain flatness compensation for each of baseband signals associated with the GSM carriers based on a GSM transmission compensation coefficient table; to perform analog channel gain flatness compensation and static power compensation for each of baseband signals associated with the UMTS carriers based on a UMTS transmission compensation coefficient table and a static power setting;

an adder, configured to combine the compensated two and more baseband signals associated with the GSM carriers and two and more baseband signals associated with the UMTS carriers, so as to obtain the first multi-carrier digital signal.

In the solution, the feedback analog channel module includes:

a radio frequency (RF) channel, configured to shift the multi-carrier output signal in frequency to obtain an intermediate frequency or baseband analog signal;

an A/D converter, configured to perform an A/D conversion on the intermediate frequency or baseband analog signal to obtain the multi-carrier digital feedback signal, and to transmit the multi-carrier digital feedback signal to the downlink digital processing module.

The disclosure provides a multi-carrier closed-loop power control method according to claim 5.

In the solution, the obtaining a first multi-carrier digital signal from input two or more baseband signals associated with carriers includes:

performing digital up-conversion on input two and more baseband signals associated with Global System for Mobile Communication (GSM) carriers;

performing analog channel gain flatness compensation for each of the GSM carriers by using a GSM transmission compensation coefficient table;

combining the two or more baseband signals associated with the GSM carriers which have undergone the digital up-conversion to obtain the first multi-carrier digital signal.

In the solution, the obtaining a first multi-carrier digital signal from input two or more baseband signals associated with carriers includes:

performing a digital up-conversion on input two and more baseband signals associated with Global System for Mobile Communication (GSM) carriers and two and more baseband signals associated with Universal Mobile Telecommunication System (UMTS) carriers, respectively;

performing analog channel gain flatness compensation for each of the GSM carriers by using a GSM transmission compensation coefficient table; performing analog channel gain flatness compensation and static power compensation for each of the UMTS carriers based on a UMTS transmission compensation coefficient table and a static power compensation; and

combining the compensated two and more baseband signals associated with the GSM carriers and two and more baseband signals associated with the UMTS carriers to obtain the first multi-carrier digital signal.

In the solution, the obtaining the multi-carrier feedback digital signal according to the multi-carrier output signal includes:

shifting the multi-carrier output signal in frequency to obtain an intermediate frequency or baseband analog signal; and

performing an A/D conversion on the intermediate frequency or baseband analog signal to obtain the multi-carrier digital feedback signal.

In the solution, the method further includes:
performing a D/A conversion, frequency shift and static power level adjustment on the second multi-carrier digital signal to obtain the multi-carrier output signal.

In the solution, the GSM transmission compensation coefficient table provides analog channel gain flatness compensation to each of the GSM carriers; and the UMTS transmission compensation coefficient table and the static power setting provides analog channel gain flatness compensation and static power compensation to each of the UMTS carriers.

The embodiments of the disclosure have the following beneficial effects:

closed-loop power compensation is directly applied to the obtained first multi-carrier digital signal at the digital part to obtain the second multi-carrier digital signal, without separating each of the carrier signals, which reduces complexity of the multi-carrier closed-loop power control. Meanwhile, as the closed-loop power control is performed at the digital part, the disadvantages due to performing the closed-loop power control at the analog part may be avoided, and thus precision of multi-carrier power control may be improved.

## BRIEF DESCRIPTION OF THE DRAWINGS

Fig. 1 is a block diagram showing closed-loop power control of a traditional narrow band base station according to the prior art;

Fig. 2 is a flow chart showing a multi-carrier closed-loop power control method according to an embodiment of the disclosure;

Fig. 3 is a block diagram of a multi-carrier closed-loop power control device according to an embodiment of the disclosure;

Fig. 4 is a block diagram of a multi-carrier closed-loop power control device for performing power control of a GSM multi-carrier base station according to an embodiment of the disclosure;

Fig. 5 is a flow chart showing closed-loop power control according to an embodiment of the disclosure; and

Fig. 6 a block diagram of a multi-carrier closed-loop power control device according to an embodiment of the disclosure for performing power control of a dual-mode base station enabling GSM and UMTS.

## DETAILED DESCRIPTION

To make the technical problems, the technical solutions and the advantages of the embodiments of the disclosure clearer, detailed description will be provided below with reference to drawings and specific embodiments.

In the prior art, power control of a multi-carrier base station is of high complexity and low precision. To address this problem, the embodiments of the disclosure provide a multi-carrier closed-loop power control method and device, which can reduce the complexity of broad band multi-carrier closed-loop power control and increase the precision of the power control.

As shown in Fig. 2, the multi-carrier closed-loop power control method according to the embodiment of the disclosure includes the following steps.

S201: a first multi-carrier digital signal is obtained from inputted two and more baseband signals associated with the carriers.

S202: closed-loop power compensation is performed on the first multi-carrier digital signal by using a multi-carrier feedback digital signal, to obtain a second multi-carrier digital signal.

S203: the multi-carrier feedback digital signal is obtained according to a multi-carrier output signal which is obtained by processing the second multi-carrier digital signal in the analog domain.

In S201, the inputted two and more baseband signals associated with the carriers are baseband signals which have undergone dynamic power control. When the inputted signals are two and more baseband signals associated with GSM carriers, the inputted two and more baseband signals associated with the GSM carriers are digitally converted; the digitally converted baseband signals associated with the GSM carriers are compensated for analog channel gain flatness for each of the GSM carriers by using a GSM transmission compensation coefficient table; the compensated two and more baseband signals associated with the GSM carriers are combined to obtain the first multi-carrier digital signal; when the inputted signals are two and more baseband signals associated with the GSM carriers and two and more baseband signals associated with the Universal Mobile Telecommunications System (UMTS) carriers, the inputted two and more baseband signals associated with the GSM carriers and two and more baseband signals associated with the UMTS carriers are digitally converted; the digitally converted baseband signals associated with the GSM carriers are compensated for analog channel gain flatness for each of the GSM carriers by using the GSM transmission compensation coefficient table; the digitally converted baseband signals associated with the UMTS carriers are compensated for analog channel gain flatness for each of the UMTS carriers and static power by using a UMTS transmission compensation coefficient table and a static power setting; both the compensations of the UMTS carriers may be performed by using a single compensation coefficient; the compensated two and more baseband signals associated with the GSM carriers and two and more baseband signals associated with the UMTS carriers are combined to obtain the first multi-carrier digital signal.

The GSM transmission compensation coefficient table provides analog channel gain flatness compensation to each of the GSM carriers, and the UMTS transmission compensation coefficient table and static power setting provide analog channel gain flatness compensation and static power compensation to each of UMTS carriers, wherein the UMTS transmission compensation coefficient table provides analog channel gain flatness compensation to each of the UMTS carriers; the static power setting compensates for attenuation of a downlink analog channel caused by the GSM static power setting; both the compensations of the UMTS carriers may be performed by using a single compensation coefficient; both the GSM transmission compensation coefficient table and the UMTS transmission compensation coefficient table may be provided by an external CPU or implemented in a memory.

In S202, a closed-loop compensation value is obtained from the signal power of each of he inputted baseband signals associated with the carriers and the signal power of the multi-carrier feedback digital signal; the first multi-carrier digital signal is multiplied with the closed-loop compensation value to obtain the second multi-carrier digital signal.

Specifically, according to each of the input baseband signals associated with the carriers, which may be IQ signals or real signals, an average transmission power of each of the carriers is calculated, the obtained average transmission powers of all carriers are summed to obtain a total power, and then static power level adjustment is performed to obtain an ideal multi-carrier average transmission power; wherein, when the average transmission power of each of the carriers is calculated, Bursts with downlink powers may be selected to calculate an average of the squares of the respective signal amplitudes, and the number of points that are averaged is determined by an update cycle of the closed-loop compensation coefficient; in this step, the actual multi-carrier transmission average power is also calculated, specifically: according to the multi-carrier feedback digital signal, which may be an IQ signal or a real signal, a feedback average power is calculated; as the ADC sampling signal has a DC component, a DC-elimination calculation is needed when the feedback average power is calculated. Other calculations are similar to those of the ideal multi-carrier average transmission power. After obtaining the feedback average power, the feedback channel gain, temperature compensation and scaling modification are performed to obtain the actual multi-carrier transmission average power; further, to guarantee the ideal multi-carrier average transmission power and the actual multi-carrier transmission average power correspond to a same signal, alignment-by-time-delay have to be performed on the multi-carrier feedback digital signal; the ideal multi-carrier average transmission power is compared with the actual multi-carrier transmission average power to obtain the closed-loop compensation value; the first multi-carrier digital signal obtained in S201 is multiplied with the closed-loop compensation value to obtain the second multi-carrier digital signal which has undergone the closed-loop compensation.

Each of the baseband signals associated with the carriers in this step may be two or more baseband signals associated with the GSM carriers, or two and more baseband signals associated with the GSM carriers and two and more baseband signals associated with the UMTS carriers.

A/D conversion is performed on the second multi-carrier digital signal which has undergone the closed-loop compensation, to obtain the analog multi-carrier signal, the analog multi-carrier signal is amplified and shifted in frequency to obtain a wide band multi-carrier radio frequency signal, the wide band multi-carrier radio frequency signal is then adjusted in the static power level and amplified by a high-power amplifier to obtain an amplified wide band multi-carrier radio frequency signal, the amplified wide band multi-carrier radio frequency signal is filtered by a duplexer to obtain a multi-carrier output signal, can then the multi-carrier output signal is transmit by an antenna. In S203, the frequency shift is performed on the multi-carrier output signal to obtain an intermediate frequency or baseband analog signal, and an A/D conversion is performed on the intermediate frequency or baseband analog signal to obtain the multi-carrier feedback digital signal. In S202, the multi-carrier feedback digital signal may be used to perform closed-loop power compensation on the first multi-carrier digital signal, to obtain the second multi-carrier digital signal.

In the embodiment, closed-loop power control is directly applied to the multi-carrier digital signal, without separating each of the carrier signals, which reduces complexity of the multi-carrier closed-loop power control ; meanwhile, closed-loop power control is performed at the digital part, and thus the disadvantages due to performing the closed-loop power control at the analog part may be avoided, which improves precision of the multi-carrier power control.

Additionally, in the embodiment, closed-loop power control also can be applied to the dual-mode multi-carrier signal.

As shown in Fig. 3, the multi-carrier closed-loop power control device according to the embodiment of the disclosure includes:

a downlink digital processing module 301, configured to obtain a first multi-carrier digital signal, and to perform closed-loop power compensation on the first multi-carrier digital signal by using a multi-carrier feedback digital signal, to obtain a second multi-carrier digital signal;

a feedback analog channel module 303, configured to obtain the multi-carrier feedback digital signal from a multi-carrier output signal which is obtained by processing the second multi-carrier digital signal in the analog domain.

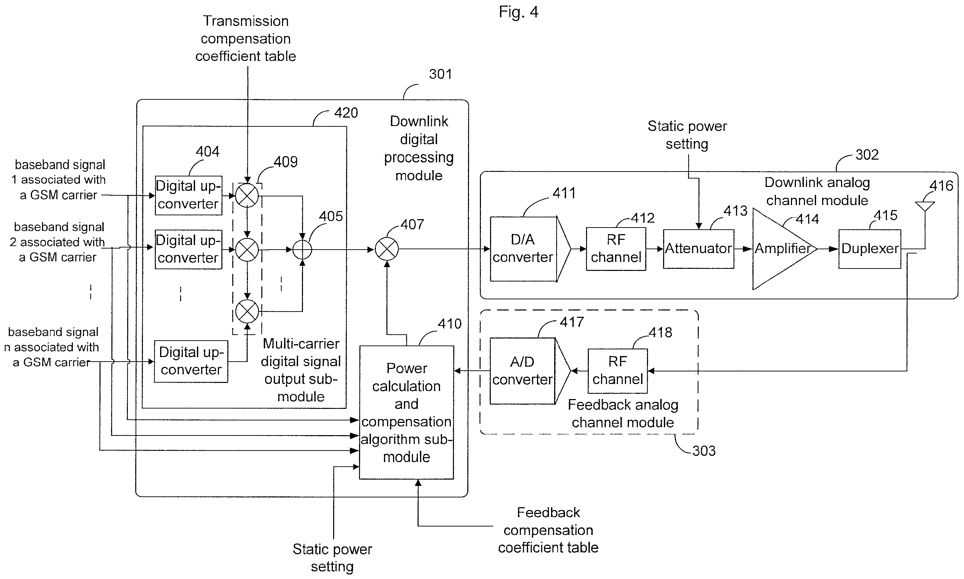

The multi-carrier closed-loop power control device according the embodiment can perform power control on a GSM multi-carrier base station. Fig. 4 shows a block diagram of a multi-carrier closed-loop power control device for performing power control of a GSM multi-carrier base station according to an embodiment of the disclosure. The downlink digital processing module 301 includes:

a multi-carrier digital signal output sub-module 420, configured to obtain the first GSM multi-carrier digital signal according to the input two or more baseband signals associated with the GSM carriers;

a power calculation and compensation algorithm sub-module 410, configured to obtain a closed-loop compensation value from the signal powers of each of the input baseband signals associated with the GSM carriers and the GSM multi-carrier feedback digital signal; and

a first calculation sub-module 407, configured to perform closed-loop power compensation on the first GSM multi-carrier digital signal according to the closed-loop compensation value, to obtain a second GSM multi-carrier digital signal which has undergone the closed-loop compensation. As shown in Fig. 4, the first calculation sub-module 407 may be a multiplier.

Further, the multi-carrier digital signal output sub-module 420 includes:

digital up-converters 404, each corresponding to a respective one of the baseband signals associated with the GSM carriers, configured to perform digital up-conversion on the input two or more baseband signals associated with the GSM carriers;

a multiplier 409, configured to, perform, for each of the GSM carriers, analog channel gain flatness compensation on the baseband signals associated with the GSM carriers, according to a GSM transmission compensation coefficient table;

an adder 405, configured to combine the compensated two or more baseband signals associated with the GSM carriers to obtain the first GSM multi-carrier digital signal.

Wherein, the multi-carrier closed-loop power control device further includes a downlink analog channel module 302, the downlink analog channel module 302 includes:

a D/A converter 411, configured to perform D/A conversion on the second multi-carrier digital signal which has undergone the closed-loop compensation and is output by the first calculation sub-module 407, to obtain the analog multi-carrier signal;

a first radio frequency channel 412, configured to amplify and shift the analog multi-carrier signal in frequency to obtain the broadband multi-carrier radio frequency signal;

a controllable attenuator 413, configured to perform static power level adjustment on the broadband multi-carrier radio frequency signal; compared with the static power adjustment at the digital part, the advantage of performing static power adjustment at the analog channel is that the dynamic range of the transmission signals can be expanded;

an amplifier 414, configured to amplify the broadband multi-carrier radio frequency signal;

a duplexer 415, configured to filter the amplified broadband multi-carrier radio frequency signal to obtain the multi-carrier output signal;

an antenna 416, configured to transmit the multi-carrier output signal.

Wherein, the feedback analog channel module 303 includes:

a second radio frequency channel 418, configured to shift the multi-carrier output signal output by the duplexer 415 in frequency to obtain the intermediate frequency or baseband analog signal; and

an A/D converter 417, configured to perform A/D conversion on the intermediate frequency or baseband analog signal to obtain the multi-carrier digital feedback signal, and transmit the multi-carrier digital feedback signal to the power calculation and compensation algorithm sub-module 410.

The operation flow of the device as shown in Fig. 4 will be described below. First of all, each of the baseband signals associated with the GSM carriers which have undergone dynamic power control is output to the digital up-converters 404 for performing digital up-conversions. The multiplier 409 performs, for each of the GSM carriers, analog channel gain flatness compensation on the baseband signals associated with the GSM carriers by using a GSM transmission compensation coefficient table. The compensated signals are combined in the adder 405 to obtain the first GSM multi-carrier digital signal. The first calculation sub-module 407 performs closed-loop power compensation on the first GSM multi-carrier digital signal to obtain the second GSM multi-carrier digital signal, which is feed to the D/A converter 411 and enters the downlink analog channel 302. The D/A converter 411 performs a D/A conversion on the second GSM multi-carrier digital signal such that it becomes an analog multi-carrier signal. Then, the analog multi-carrier signal enters the first RF channel 412, is amplified and shifted in frequency, and then input to the controllable antenna 413, which adjusts the static power level of the GSM signal. As the static power adjustment is performed at the analog part, a larger dynamic range of the D/A converter 411 may be employed, which expands the dynamic range of the downlink transmission signal. Then, the adjusted signal passes through the high power amplifier 414 and an amplified wide band multi-carrier RF signal is obtained. The amplified wide band multi-carrier RF signal is filtered by the duplexer 415 and then transmitted through the antenna 416. The feedback analog channel 303 performs a frequency shift on the multi-carrier output signal output by the duplexer 415 in the second radio frequency channel 418 to obtain the intermediate or baseband analog signal. The A/D converter 417 performs an A/D conversion on the intermediate or baseband analog signal to obtain the multi-carrier feedback digital signal, which is provided to the power calculation and compensation algorithm sub-module 410 in the downlink digital processing module 301.

The power calculation and compensation algorithm sub-module 410 has to calculate two power values, one of which is the ideal multi-carrier average transmission power of the input baseband signals associated with the GSM carriers, that is, the target power value; the other of which is the actual multi-carrier transmission average power obtained according to the multi-carrier digital feedback signal output by the A/D converter 417, that is, the actual power value of the downlink transmission, and compare the two power values to obtain the closed-loop compensation value. The purpose of closed-loop compensation is to keep the actual transmission power to be consistent with the target power value. As the transmission channel gain is slowly changing, two power values in one cycle (for example, in a level of minute) can be averaged respectively to obtain two average power values, and the closed-loop compensation value in the next cycle can be obtained from the difference of the two power values.

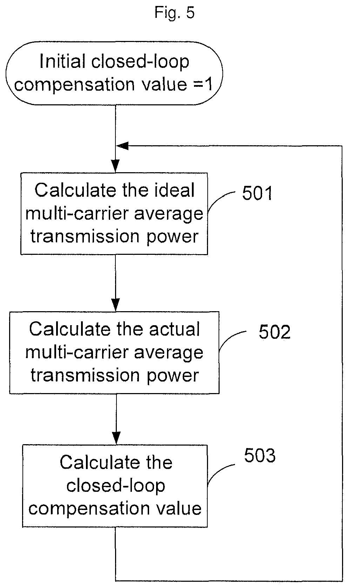

Fig. 5 is a flow chart showing closed-loop multi-carrier power control.

First of all, the initial closed-loop compensation value $\mu$ is set as 1, the second multi-carrier digital signal which has undergone the closed-loop compensation is obtained from the initial closed-loop compensation value, and the multi-carrier digital feedback signal is output by the feedback analog channel module 303. The subsequent flow is described as follows.

S501: the ideal multi-carrier average transmission power *Average_Power_Ideal* is calculated.

That is, the ideal multi-carrier transmission average power is calculated. The power calculation and compensation algorithm sub-module 410 calculates the average transmission power for each of the carriers according to the respective input baseband signal associated with the carrier, which may be an IQ signal or a real signal, to obtain the average transmission power *Average_Power_Digital(i)*; $i = 1 \sim k$ for each of the carriers, and calculates the sum of the average transmission powers for all of the carriers to obtain the total power $\sum_{i=1}^{k} Average\_Power\_Digital(i)$. In the embodiment, as the static power adjustment is performed by the attenuator 413 in the downlink analog channel module 302, rather than being perfromed at the digital part before the ideal power calculation, static power level adjustment compensation are perfromed after the $\sum_{i=1}^{k} Average\_Power\_Digital(i)$ is obtained, wherein the static power level adjustment compensation value *Static_Power_adjust* depends on the GSM static power level n, that is, $10^{n/10}$. Finally, the ideal multi-carrier average transmission power *Average_Power_Ideal* is obtained:

$$Average\_Power\_Ideal = \sum_{i=1}^{k} Average\_Power\_Digital(i) / 10^{2 \bullet n/10}$$

S502: the actual multi-carrier transmission average power *Average_Power_Actual* is calculated.

The power calculation and compensation algorithm sub-module 410 calculates the feedback average power *Average_Power_Feedback* according to the input multi-carrier digital feedback signal (an IQ signal or a real signal). As the sampling signal output by the A/D converter 417 has a DC component, when the power of the multi-carrier digital feedback signal is calculated, a DC-elimination calculation is needed, and other calculations are similar to those in S501. To guarantee the two power calculations correspond to a same signal, an operation of alignment-by-time-delay has to be performed on the multi-carrier digital feedback signal. The input to the actual multi-carrier transmission average power calculation is the multi-carrier digital feedback signal output by the feedback analog channel module 303, which is within the operation temperature range and the operation frequency range of the base station. The gain of the feedback analog channel must have a small fluctuation, but it is difficult to implement. Therefore, when the actual transmission power is calculated, the gain of the feedback analog channel must be compensated for gain flatness, temperature gain change, and the feedback channel gain variances among different base stations. The compensation coefficient of the feedback analog channel can be obtained by searching in the compensation coefficient table provided by the external CPU or saved in the memory. After *Average_Power_Feedback* is obtained, feedback channel gain compensation and scaling modification are performed to obtain *Average_Power_Actual*:

$$Average\_Power\_Actual$$
$$= Average\_Power\_Feedback \bullet \sum_{i=1}^{k} \frac{Average\_Power\_Digital(i)}{Average\_Power\_Ideal} \bullet \delta(i)^2 \bullet \phi$$

where, $\delta(i)$; $i = 1 \sim k$ is the compensation coefficient of the feedback channel carrier *i*, and involves the channel gain compensation and temperature compensation (amplitude compensation value) for this carrier; $\phi$ is the scaling modification value of the ideal multi-carrier average transmission power value and the actual multi-carrier transmission average power value, which is to ensure that the calculation results of *Average_Power_Ideal* and *Average_Power_Actual* are consistent with each other when the channel gain is normal, and this value keeps constant after being determined.

S503: the closed-loop compensation value $\mu$ is calculated.

The closed-loop compensation value $\mu$ is calculated according to

$$\mu = \sqrt{Average\_Power\_Ideal/Average\_Power\_Actual} \; .$$

Then, the power calculation and compensation algorithm sub-module 410 outputs the closed-loop compensation value $\mu$. The first calculation sub-module 407 performs closed-loop power compensation on the first multi-carrier digital signal according to the closed-loop compensation value $\mu$, to obtain the second multi-carrier digital signal which has undergone the closed-loop compensation.

In the next update cycle for the closed-loop compensation value, for example, in the next minute, the power calculation and compensation algorithm sub-module 410 performs a recalculation according to the first multi-carrier digital signal output by the adder 405 and the multi-carrier digital feedback signal output by the feedback analog channel 303 to obtain the closed-loop compensation value $\mu$ for the next cycle. The first calculation sub-module 407 performs closed-loop power compensation on the first multi-carrier digital signal according to the new closed-loop compensation value $\mu$ to obtain the second multi-carrier digital signal. S501 to S503 are repeated to calculate the closed-loop compensation value in each update cycle for the closed-loop compensation value.

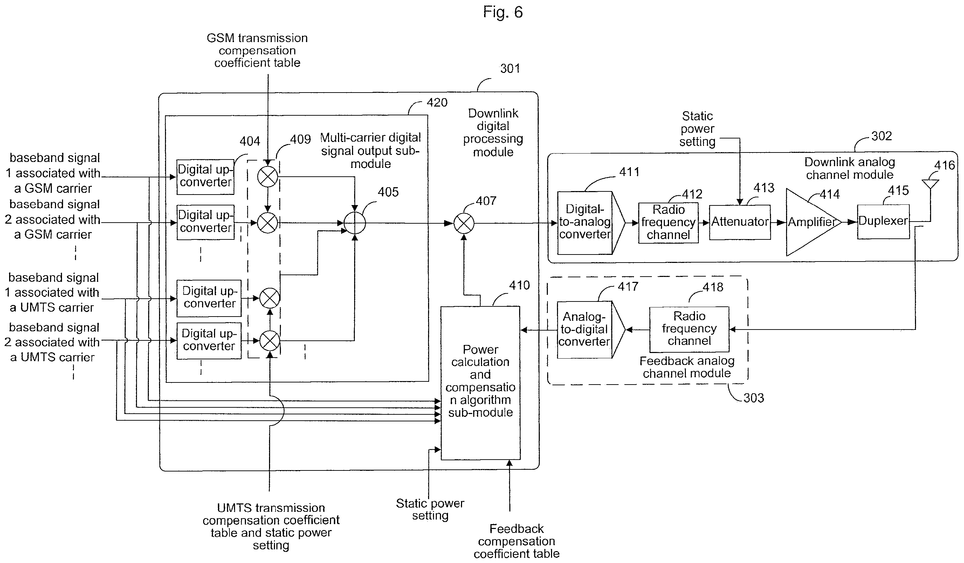

In the embodiment, the multi-carrier closed-loop power control device can also perform power control on a GSM/UMTS dual-mode base station, Fig. 6 is a block diagram of a multi-carrier closed-loop power control device performing power control on a dual-mode base station enabling GSM and UMTS. The only difference from the device as shown in Fig. 4 is that a multi-carrier digital signal output sub-module 420 is provided. In the embodiment, the multi-carrier digital signal output sub-module 420 includes:

digital up-converters 404, each corresponding to a respective one of the baseband signals associated with the GSM carriers and the baseband signals associated with the UMTS carriers, configured to perform digital up-conversions on input two and more baseband signals associated with Global System for Mobile Communication (GSM) carriers and two and more baseband signals associated with Universal Mobile Telecommunication System (UMTS) carriers, respectively;

a multiplier 409, configured to perform, for each of the GSM carriers, analog channel gain flatness compensation on the baseband signal associated with the GSM carrier which has undergone the digital up-conversion, according to the GSM transmission compensation coefficient table; and to perform, for each of the UMTS carriers, analog channel gain flatness compensation and static power compensation on the baseband signal associated with the UMTS carrier which has undergone the digital up-conversion, according to the UMTS transmission compensation coefficient table and the static power setting;

an adder 405, configured to combine the compensated two and more baseband signals associated with the GSM carriers and two and more baseband signals associated with the UMTS carriers to obtain the first multi-carrier digital signal.

As shown in Fig. 6, the first calculation sub-module 407 may be a multiplier;
wherein, the input two and more baseband signals associated with the GSM carriers and two and more baseband signals associated with the UMTS carriers are baseband signals which have undergone the dynamic power control. When power control is performed on a dual-mode base station enabling GSM and UMTS, baseband signals associated with the GSM carriers and baseband signals associated with the UMTS carriers are input into their respective digital up-converters 404 for digital up-conversions. After the baseband signals associated with the GSM carriers and the baseband signals associated with the UMTS carriers pass through the digital up-converters 404, the multiplier 409 performs analog channel gain flatness compensation for each of the GMS carriers according to the corresponding GSM transmission compensation coefficient table, and performs analog channel gain flatness compensation and static power compensation for each of the UMTS carriers according to the UMTS transmission compensation coefficient table and the static power setting, then all of the compensated baseband signals associated with the carriers are combined by the first adder 405 to obtain the first multi-carrier digital signal. The subsequent other flows are the same as the operation flows of the multi-carrier closed-loop power control device as shown in Fig. 4.

To perform power control on a dual-mode base station enabling GSM and UMTS, it is necessary to perform independent power adjustments on GSM carriers and UMTS carriers. In the embodiment, the gain in the downlink analog channel keeps constant, and power adjustment is independently performed on the two carriers at the digital part and then the dual modes are combined. For the GSM carriers, if all of the power adjustments are performed at the digital part, the signal-to-noise ratio of the transmission signals in the case of a small power may be influenced. Thus, the static power level adjustment for the GSM is still performed by the controllable attenuator 413 in the downlink analog channel 302, this will, however, influence the transmission power for the UMTS carriers. Therefore, static power compensation must be performed on the digital signals associated with the UMTS carriers by the multiplier 409, in order to compensate the attenuation in the downlink analog channel caused by the GSM static power setting, wherein the static power level adjustment compensation value depends on the GSM static power level n, that is, $10^{n/10}$.

In the embodiment, closed-loop power compensation is directly applied to the multi-carrier digital signal at the digital part, which reduces complexity of the multi-carrier closed-loop power control. Meanwhile, the disadvantages of low precision of the power control due to performing the closed-loop power control at the analog part may be avoided In the embodiments, the compensation for the analog feedback channel gain is performed at the digital part, which further improves precision of the closed-loop power control. In addition, the devices provided in the embodiments may perform independent power adjustments on the dual modes of GSM and UMTS and perform closed-loop power control on a dual-mode base station enabling GSM and UMTS.

The method embodiments are corresponding to the device embodiments. For what are not described in details in the method embodiments, the skilled in the art may refer to relevant descriptions in the device embodiments, and for what are not described in details in the device embodiments, the skilled in the art may refer to relevant descriptions in the method embodiments.

As an ordinary skilled person in the art will understand, all or some of the steps in the methods in the above embodiments may be implemented in hardware that are instructed by a program, The program may be stored in a computer readable storage medium. The program, when being executed, includes steps in the embodiment of the method. The storage medium may be, for example, disk, disc, Read-Only Memory (ROM) or Random Access Memory (RAM), or the like.

In each of the method embodiments in the disclosure, the number of each of the steps should not be used for limiting the order of the steps. For an ordinary skilled person in the art,, the changes of the order of the steps should fall within the protection scope of the disclosure without any inventive work.

The above description is just the preferred embodiments of the disclosure. It should be noted that, for an ordinary skilled person in the art, various improvements and modification may be made without departing from the principle of the disclosure, and these improvements and modification should also be considered as within the protection scope of the disclosure.

**Claims**

1. A multi-carrier closed-loop power control device, comprising:

    a downlink digital processing module (301), configured to obtain a first multi-carrier digital signal, and to perform closed-loop power compensation on the first multi-carrier digital signal by using a multi-carrier feedback digital signal so as to obtain a second multi-carrier digital signal;
    a feedback analog channel module (303), configured to obtain the multi-carrier feedback digital signal from a multi-carrier output signal which is obtained by processing the second multi-carrier digital signal in an analog domain; and
    a downlink analog channel module (302), configured to perform a D/A conversion, frequency shift and static power level adjustment on the second multi-carrier digital signal, so as to obtain the multi-carrier output signal, the downlink digital processing module (301) comprising:

        a multi-carrier digital signal output sub-module (420), configured to obtain the first multi-carrier digital signal from input two or more baseband signals associated with carriers;
        a power calculation and compensation algorithm sub-module (410), configured to obtain a closed-loop compensation value from signal powers of all of the input baseband signals associated with the carriers and a signal power of the multi-carrier feedback digital signal; and
        a first calculation sub-module (407), configured to perform closed-loop power compensation on the first multi-carrier digital signal by using the closed-loop compensation value, so as to obtain the second multi-carrier digital signal,
        wherein the power calculation and compensation algorithm sub-module (410) is specifically configured to calculate an average transmission power for each of the carriers according to a respective input baseband signal associated with the carrier, to calculate a sum of the average transmission powers for all of the carriers, then to perform static power level adjustment compensation, so as to obtain a target multi-carrier average transmission power; to calculate a feedback average power according to the multi-carrier feedback digital signal, so as to obtain a feedback average power, then to perform feedback channel gain compensation, temperature compensation and scaling modification, so as to obtain an actual multi-carrier transmission average power; and to compare the target multi-carrier average transmission power with the actual multi-carrier transmission average power, so as to obtain the closed-loop compensation value.

2. The multi-carrier closed-loop power control device according to claim 1, wherein the multi-carrier digital signal output sub-module comprises:

    digital up-converters (404), each corresponding to a respective one of the baseband signals associated with the carriers, configured to perform digital up-conversions on input two and more baseband signals associated with Global System for Mobile Communication, GSM, carriers;
    a multiplier (409), configured to perform analog channel gain flatness compensation for each of the GSM carriers based on a GSM transmission compensation coefficient table; and
    an adder (405), configured to combine the compensated two and more baseband signals associated with the GSM carriers, so as to obtain the first multi-carrier digital signal.

3. The multi-carrier closed-loop power control device according to claim 1, wherein the multi-carrier digital signal output sub-module comprises:

    digital up-converters, each corresponding to a respective one of the baseband signals associated with the carriers, configured to perform digital up-conversions on input two and more baseband signals associated with Global System for Mobile Communication, GSM, carriers and two and more baseband signals associated with Universal Mobile Telecommunication System, UMTS, carriers, respectively;

a multiplier, configured to perform analog channel gain flatness compensation for each of the GSM carriers based on a GSM transmission compensation coefficient table; and to perform analog channel gain flatness compensation and static power compensation for each of the UMTS carriers based on a UMTS transmission compensation coefficient table and a static power setting; and

an adder, configured to combine the compensated two and more baseband signals associated with the GSM carriers and two and more baseband signals associated with the UMTS carriers, so as to obtain the first multi-carrier digital signal.

4. The multi-carrier closed-loop power control device according to claim 1, wherein the feedback analog channel module comprises:

a radio frequency, RF, channel, configured to shift the multi-carrier output signal in frequency to obtain an intermediate frequency or baseband analog signal; and

an A/D converter, configured to perform an A/D conversion on the intermediate frequency or baseband analog signal to obtain the multi-carrier digital feedback signal, and to transmit the multi-carrier digital feedback signal to the downlink digital processing module.

5. A multi-carrier closed-loop power control method, comprising:

obtaining (201) a first multi-carrier digital signal from input two or more baseband signals associated with carriers;

performing (202) closed-loop power compensation on the first multi-carrier digital signal by using a multi-carrier feedback digital signal so as to obtain a second multi-carrier digital signal; and

obtaining (203) the multi-carrier feedback digital signal from a multi-carrier output signal which is obtained by processing the second multi-carrier digital signal in an analog domain,

the performing closed-loop power compensation on the first multi-carrier digital signal by using the multi-carrier feedback digital signal so as to obtain the second multi-carrier digital signal comprising:

obtaining a closed-loop compensation value from signal powers of all of the input baseband signals associated with the carriers and a signal power of the multi-carrier feedback digital signal; and

multiplying the first multi-carrier digital signal with the closed-loop compensation value to obtain the second multi-carrier digital signal;

wherein the obtaining the closed-loop compensation value from the signal powers of all of the input baseband signals associated with the carriers and the signal power of the multi-carrier feedback digital signal comprises:

calculating (501) an average transmission power for each of the carriers according to a respective input baseband signal associated with the carrier, then calculating a sum of the average transmission powers for all of the carriers, and then performing a static power level adjustment to obtain a target multi-carrier average transmission power;

calculating (502) a feedback average power according to the multi-carrier feedback digital signal, and then performing feedback channel gain compensation, temperature compensation and scaling modification to obtain an actual multi-carrier transmission average power; and

comparing (503) the target multi-carrier average transmission power with the actual multi-carrier transmission average power to obtain the closed-loop compensation value.

6. The multi-carrier closed-loop power control method according to claim 5, wherein the obtaining the first multi-carrier digital signal from input two or more baseband signals associated with carriers comprises:

performing digital up-conversions on input two and more baseband signals associated with Global System for Mobile Communication, GSM, carriers;

performing analog channel gain flatness compensation for each of the GSM carriers by using a GSM transmission compensation coefficient table; and

combining the two or more baseband signals associated with the GSM carriers which have undergone the digital up-conversions to obtain the first multi-carrier digital signal.

7. The multi-carrier closed-loop power control method according to claim 5, wherein the obtaining the first multi-carrier digital signal from input two or more baseband signals associated with carriers comprises:

performing digital up-conversions on input two and more baseband signals associated with Global System for Mobile Communication, GSM, carriers and two and more baseband signals associated with Universal Mobile Telecommunication System, UMTS, carriers, respectively;

performing analog channel gain flatness compensation for each of the GSM carriers by using a GSM transmission compensation coefficient table; performing analog channel gain flatness compensation and static power compensation for each of the UMTS carriers by using a UMTS transmission compensation coefficient table and a static power compensation; and

combining the compensated two and more baseband signals associated with the GSM carriers and two and more baseband signals associated with the UMTS carriers to obtain the first multi-carrier digital signal.

8. The multi-carrier closed-loop power control method according to claim 5, wherein the obtaining the multi-carrier feedback digital signal from the multi-carrier output signal comprises:

shifting the multi-carrier output signal in frequency to obtain an intermediate frequency or baseband analog signal; and

performing an A/D conversion on the intermediate frequency or baseband analog signal to obtain the multi-carrier digital feedback signal.

9. The multi-carrier closed-loop power control method according to any one of claims 5-8, further comprising: performing a D/A conversion, frequency shift and static power level adjustment on the second multi-carrier digital signal to obtain the multi-carrier output signal.

10. The multi-carrier closed-loop power control method according to claim 6, wherein the GSM transmission compensation coefficient table provides analog channel gain flatness compensation to each of the GSM carriers; and the UMTS transmission compensation coefficient table and the static power setting provides analog channel gain flatness compensation and static power compensation to each of the UMTS carriers.

## Patentansprüche

1. Mehrfachträger-Leistungsregelungsvorrichtung bei geschlossener Schleife, umfassend:

ein digitales Downlink-Verarbeitungsmodul (301), das dazu konfiguriert ist, ein erstes digitales Mehrfachträgersignal zu erhalten und durch Verwendung eines digitalen Mehrfachträger-Rückkopplungssignals an dem ersten digitalen Mehrfachträgersignal eine Leistungsregelungs-Kompensation bei geschlossener Schleife durchzuführen, um so ein zweites digitales Mehrfachträgersignal zu erhalten;

ein analoges Rückkopplungs-Kanal-Modul (303), das dazu konfiguriert ist, das digitale Mehrfachträger-Rückkopplungssignal aus einem Mehrfachträger-Ausgangssignal zu erhalten, das durch Verarbeiten des zweiten digitalen Mehrfachträgersignals in einem analogen Bereich erhalten wird; und

ein analoges Downlink-Kanal-Modul (302), das dazu konfiguriert ist, eine Digital-Analog-Wandlung, eine Frequenzverschiebung und eine statische Leistungspegeleinstellung an dem zweiten digitalen Mehrfachträgersignal durchzuführen, um so das Mehrfachträger-Ausgangssignal zu erhalten,

das digitale Downlink-Verarbeitungsmodul (301) umfassend:

ein digitales Mehrfachträger-Signalausgang-Untermodul (420), das dazu konfiguriert ist, das erste digitale Mehrfachträgersignal von zwei oder mehr eingegebenen Basisbandsignalen, die Trägern zugeordnet sind, zu erhalten;

ein Leistungsberechnungs- und -kompensationsalgorithmus-Untermodul (410), das dazu konfiguriert ist, einen Kompensationswert bei geschlossener Schleife von Signalleistungen von allen den eingegebenen Basisbandsignalen, die den Trägern zugeordnet sind, und eine Signalleistung des digitalen Mehrfachträger-Rückkopplungssignals zu erhalten; und

ein erstes Berechnungs-Untermodul (407), das dazu konfiguriert ist, durch Verwendung des Kompensationswerts bei geschlossener Schleife an dem ersten digitalen Mehrfachträgersignal eine Leistungsregelungs-Kompensation durchzuführen, um so das zweite digitale Mehrfachträgersignal zu erhalten,

wobei das Leistungsberechnungs- und -kompensationsalgorithmus-Untermodul (410) speziell dazu konfiguriert ist, für jeden der Träger gemäß einem jeweiligen dem Träger zugeordneten Eingabe-Basisbandsignal eine durchschnittliche Übertragungsleistung zu berechnen, um eine Summe der durchschnittlichen Übertragungsleistungen für alle Träger zu berechnen, dann eine statische Leistungsregelung-Einstellungs-Kompensation durchzuführen, um so eine durchschnittliche Ziel-Mehrfachträger-Übertragungsleistung zu erhalten; gemäß dem digitalen Mehrfachträger-Rückkopplungssignal eine durchschnittliche Rückkopplungsleistung zu berechnen, um so eine durchschnittliche Rückkopplungsleistung zu erhalten, dann eine Rückkopplungskanal-Verstärkungskompensation, Temperaturkompensation und Skalierungsmodifikation durchzuführen, um so eine tatsächliche durchschnittliche Mehrfachträger-Übertragungsleistung zu erhalten; und die durchschnittliche Ziel-Mehrfachträger-Übertragungsleistung mit der tatsächlichen durchschnittlichen Mehrfachträger-Übertragungsleistung zu vergleichen, um so den Kompensationswert bei geschlossener Schleife zu erhalten.

2. Mehrfachträger-Leistungsregelungsvorrichtung bei geschlossener Schleife gemäß Anspruch 1, wobei das digitale Mehrfachträgersignal-Ausgang-Untermodul umfasst:

digitale Aufwärtswandler (404), die jeweils einem entsprechenden der den Trägern zugeordneten Basisbandsignalen entsprechen, die dazu konfiguriert sind, an zwei oder mehr eingegebenen Basisbandsignalen, die Trägern des Globalen Systems für Mobile Kommunikation, GSM, zugeordnet sind, digitale Aufwärtswandlungen durchzuführen;
eine Multiplikationseinrichtung (409), die dazu konfiguriert ist, für jeden der GSM-Träger auf Basis einer GSM-Übertragungs-Kompensationskoeffizienten-Tabelle eine analoge Kanalverstärkungs-Flachheits-Kompensation durchzuführen; und
eine Addiereinrichtung (405), die dazu konfiguriert ist, die kompensierten den GSM-Trägern zugeordneten, zwei oder mehr Basisbandsignale zu kombinieren, um das erste digitale Mehrfachträgersignal zu erhalten.

3. Mehrfachträger-Leistungsregelungsvorrichtung bei geschlossener Schleife gemäß Anspruch 1, wobei das digitale Mehrfachträgersignal-Ausgang-Untermodul umfasst:

digitale Aufwärtswandler, die jeweils einem entsprechenden der den Trägern zugeordneten Basisbandsignalen entsprechen, die dazu konfiguriert sind, an zwei oder mehr eingegebenen Basisbandsignalen, die Trägern des Globalen Systems für Mobile Kommunikation, GSM, zugeordnet sind, bzw. zwei und mehr Basisbandsignalen, die Trägern des Universellen Mobilen Telekommunikationssystems, UMTS, zugeordnet sind, digitale Aufwärtswandlungen durchzuführen;
eine Multiplikationseinrichtung, die dazu konfiguriert ist, für jeden der GSM-Träger auf Basis einer GSM-Übertragungs-Kompensationskoeffizienten-Tabelle eine analoge Kanalverstärkungs-Flachheits-Kompensation durchzuführen; und für jeden der UMTS-Träger auf Basis einer UMTS-Übertragungs-Kompensationskoeffizienten-Tabelle und einer statischen Leistungskompensation eine analoge Kanalverstärkungs-Flachheits-Kompensation und statische Leistungskompensation durchzuführen; und
eine Addiereinrichtung, die dazu konfiguriert ist, die kompensierten, den GSM-Trägern zugeordneten zwei oder mehr Basisbandsignale und die den UMTS-Trägern zugeordneten zwei oder mehr Basisbandsignale zu kombinieren, um das erste digitale Mehrfachträgersignal zu erhalten.

4. Mehrfachträger-Leistungsregelungsvorrichtung bei geschlossener Schleife gemäß Anspruch 1, wobei das analoge Rückkopplungs-Kanal-Modul umfasst:

einen Hochfrequenz-Kanal (RF-Kanal), der dazu konfiguriert ist, das Mehrfachträger-Ausgangssignal in der Frequenz zu verschieben, um ein analoges Signal einer Zwischenfrequenz oder eines Basisbands zu erhalten; und
einen Analog-Digital-Wandler, der dazu konfiguriert ist, an dem analogen Signal einer Zwischenfrequenz oder eines Basisbands eine Analog-Digital-Wandlung durchzuführen, um das digitale Mehrfachträger-Rückkopplungssignal zu erhalten, und das digitale Mehrfachträger-Rückkopplungssignal an das digitale Downlink-Verarbeitungsmodul zu übertragen.

5. Mehrfachträger-Leistungsregelungsverfahren bei geschlossener Schleife, umfassend:

Erhalten (201) eines ersten digitalen Mehrfachträgersignals aus zwei oder mehr eingegebenen Basisbandsignalen, die Trägern zugeordnet sind;
Durchführen (202) einer Leistungskompensation an dem ersten digitalen Mehrfachträgersignal durch Verwendung eines digitalen Mehrfachträger-Rückkopplungssignals, um so ein zweites digitales Mehrfachträgersignal zu erhalten; und

Erhalten (203) des digitalen Mehrfachträger-Rückkopplungssignals aus einem Mehrfachträger-Ausgangssignal, das durch Verarbeiten des zweiten digitalen Mehrfachträgersignals in einem analogen Bereich erhalten wird, das Durchführen der Leistungskompensation bei geschlossener Schleife an dem ersten digitalen Mehrfachträgersignal durch die Verwendung des digitalen Mehrfachträger-Rückkopplungssignals, um so das zweite digitale Mehrfachträgersignal zu erhalten, umfassend:

Erhalten eines Kompensationswerts bei geschlossener Schleife aus Signalleistungen aller der eingegebenen Basisbandsignale, die den Trägern zugeordnet sind, und einer Signalleistung des digitalen Mehrfachträger-Rückkopplungssignals; und

Multiplizieren des ersten digitalen Mehrfachträgersignals mit dem Kompensationswert bei geschlossener Schleife zum Erhalten des zweiten digitalen Mehrfachträgersignals;

wobei das Erhalten des Kompensationswerts bei geschlossener Schleife aus den Signalleistungen aller der eingegebenen Basisbandsignale, die den Trägern zugeordnet sind, und der Signalleistung des Mehrfachträger-Rückkopplungssignals umfasst:

Berechnen (501) einer durchschnittlichen Übertragungsleistung für jeden der Träger gemäß einem jeweiligen Eingabe-Basisbandsignal, das dem Träger zugeordnet ist, dann Berechnen einer Summe der durchschnittlichen Übertragungsleistungen für alle Träger, und dann Durchführen einer statischen Leistungspegeleinstellung zum Erhalten einer durchschnittlichen Ziel-Mehrfachträger-Übertragungsleistung;

Berechnen (502) einer durchschnittlichen Rückkopplungsleistung gemäß dem digitalen Mehrfachträger-Rückkopplungssignal und dann Durchführen einer Rückkopplungskanal-Verstärkungskompensation, Temperaturkompensation und Skalierungsmodifikation zum Erhalten einer tatsächlichen durchschnittlichen Mehrfachträger-Übertragungsleistung; und

Vergleichen (503) der durchschnittliche Ziel-Mehrfachträger-Übertragungsleistung mit der tatsächlichen durchschnittlichen Mehrfachträger-Übertragungsleistung zum Erhalten des Kompensationswerts bei geschlossener Schleife.

6. Mehrfachträger-Leistungsregelungsverfahren bei geschlossener Schleife gemäß Anspruch 5, wobei das Erhalten des ersten digitalen Mehrfachträgersignals aus zwei oder mehr eingegebenen Basisbandsignalen, die Trägern zugeordnet sind, umfasst:

Durchführen digitaler Aufwärtswandlungen an zwei oder mehr eingegebenen Basisbandsignalen, die Trägern des Globalen Systems für Mobile Kommunikation, GSM, zugeordnet sind;

Durchführen einer analogen Kanalverstärkungs-Flachheits-Kompensation für jeden der GSM-Träger unter Verwendung einer GSM-Übertragungs-Kompensations-Koeffizienten-Tabelle; und

Kombinieren der den GSM-Trägern zugeordneten zwei oder mehr Basisbandsignale, an denen die digitalen Aufwärtswandlungen durchgeführt wurden, zum Erhalten des ersten digitalen Mehrfachträgersignals.

7. Mehrfachträger-Leistungsregelungsverfahren bei geschlossener Schleife gemäß Anspruch 5, wobei das Erhalten des ersten digitalen Mehrfachträgersignals aus zwei oder mehr eingegebenen Basisbandsignalen, die Trägern zugeordnet sind, umfasst:

Durchführen digitaler Aufwärtswandlungen an zwei oder mehr eingegebenen Basisbandsignalen, die Trägern des Globalen Systems für Mobile Kommunikation, GSM, zugeordnet sind, bzw. zwei oder mehr Basisbandsignalen, die Trägern des Universellen Mobilen Telekommunikationssystems, UMTS, zugeordnet sind;

Durchführen einer analogen Kanalverstärkungs-Flachheits-Kompensation für jeden der GSM-Träger unter Verwendung einer GSM-Übertragungs-Kompensations-Koeffizienten-Tabelle; Durchführen einer analogen Kanalverstärkungs-Flachheits-Kompensation und einer statischen Leistungskompensation für jeden der UMTS-Träger unter Verwendung einer UMTS-Übertragungs-Kompensations-Koeffizienten-Tabelle und einer statischen Leistungseinstellung; und

Kombinieren der kompensierten, den GSM-Trägern zugeordneten zwei oder mehr Basisbandsignale und den UMTS-Trägern zugeordneten zwei oder mehr Basisbandsignale zum Erhalten des ersten digitalen Mehrfachträgersignals.

8. Mehrfachträger-Leistungsregelungsverfahren bei geschlossener Schleife gemäß Anspruch 5, wobei das Erhalten des digitalen Mehrfachträger-Rückkopplungssignals aus dem Mehrfachträger-Ausgangssignal umfasst:

Verschieben des Mehrfachträger-Ausgangssignals in der Frequenz zum Erhalten eines analogen Signals einer Zwischenfrequenz oder eines Basisbands; und

Durchführen einer Analog-Digital-Wandlung an dem analogen Signal einer Zwischenfrequenz oder eines Basisbands zum Erhalten des digitalen Mehrfachträger-Rückkopplungssignals.

9. Mehrfachträger-Leistungsregelungsverfahren bei geschlossener Schleife gemäß einem der Ansprüche 5 bis 8, ferner umfassend:
Durchführen einer Digital-Analog-Wandlung, einer Frequenzverschiebung und einer statischen Leistungspegeleinstellung an dem zweiten digitalen Mehrfachträgersignal zum Erhalten des Mehrfachträger-Ausgangssignals.

10. Mehrfachträger-Leistungsregelungsverfahren gemäß Anspruch 6, wobei die GSM-Übertragungs-Kompensations-Koeffizienten-Tabelle für jeden der GSM-Träger eine analoge Kanalverstärkungs-Flachheits-Kompensation bereitstellt; und die UMTS-Übertragungs-Kompensations-Koeffizienten-Tabelle und die statische Leistungspegeleinstellung eine analoge Kanalverstärkungs-Flachheits-Kompensation und eine statische Leistungskompensation für jeden der UMTS-Träger bereitstellt.


**Revendications**

1. Dispositif de commande de puissance en boucle fermée de porteuses multiples comprenant :

un module de traitement numérique de liaison descendante (301) configuré pour obtenir un premier signal numérique de porteuses multiples et pour effectuer une compensation de puissance en boucle fermée sur le premier signal numérique de porteuses multiples en utilisant un signal numérique de rétroaction de porteuses multiples de manière à obtenir un deuxième signal numérique de porteuses multiples ;
un module de canal analogique de rétroaction (303) configuré pour obtenir le signal numérique de rétroaction de porteuses multiples à partir d'un signal de sortie de porteuses multiples qui est obtenu en traitant le deuxième signal numérique de porteuses multiples dans un domaine analogique ; et
un module de canal analogique de liaison descendante (302) configuré pour effectuer une conversion N/A, un décalage de fréquence et un réglage de niveau de puissance statique sur le deuxième signal numérique de porteuses multiples, de manière à obtenir le signal de sortie de porteuses multiples,
le module de traitement numérique de liaison descendante (301) comprenant :

un sous-module de sortie de signal numérique de porteuses multiples (420) configuré pour obtenir le premier signal numérique de porteuses multiples à partir d'au moins deux signaux de bande de base d'entrée associés à des porteuses ;
un sous-module d'algorithme de calcul et de compensation de puissance (410) configuré pour obtenir une valeur de compensation en boucle fermée à partir de puissances de signal de la totalité des signaux de bande de base d'entrée associés aux porteuses et d'une puissance de signal du signal numérique de rétroaction de porteuses multiples ; et
un premier sous-module de calcul (407) configuré pour effectuer une compensation de puissance en boucle fermée sur le premier signal numérique de porteuses multiples en utilisant la valeur de compensation en boucle fermée, de manière à obtenir le deuxième signal numérique de porteuses multiples,
dans lequel le sous-module d'algorithme de calcul et de compensation de puissance (410) est spécialement configuré pour calculer une puissance de transmission moyenne pour chacune des porteuses en fonction d'un signal de bande de base d'entrée respectif associé à la porteuse, pour calculer une somme des puissances de transmission moyennes pour la totalité des porteuses, puis pour effectuer une compensation de réglage de niveau de puissance statique, de manière à obtenir une puissance de transmission moyenne de porteuses multiples cible ; pour calculer une puissance moyenne de rétroaction en fonction du signal numérique de rétroaction de porteuses multiples, de manière à obtenir une puissance moyenne de rétroaction, puis pour effectuer une compensation de gain de canal de rétroaction, une compensation de température et une modification de mise à l'échelle, de manière à obtenir une puissance de transmission moyenne de porteuses multiples effective ; et pour comparer la puissance de transmission moyenne de porteuses multiples cible à la puissance de transmission moyenne de porteuses multiples effective, de manière à obtenir la valeur de compensation en boucle fermée.

2. Dispositif de commande de puissance en boucle fermée de porteuses multiples selon la revendication 1, dans lequel le sous-module de sortie de signal numérique de porteuses multiples comprend :

des convertisseurs élévateurs numériques (404), chacun correspondant à l'un respectif des signaux de bande de base associés aux porteuses, configurés pour effectuer des conversions par élévation numériques sur au moins deux signaux de bande de base d'entrée associés à des porteuses de système mondial de communications mobiles, GSM ;

un multiplicateur (409) configuré pour effectuer une compensation de planéité de gain de canal analogique pour chacune des porteuses GSM sur la base d'une table de coefficients de compensation de transmission GSM ; et

un additionneur (405) configuré pour combiner les au moins deux signaux de bande de base compensés associés aux porteuses GSM, de manière à obtenir le premier signal numérique de porteuses multiples.

3. Dispositif de commande de puissance en boucle fermée de porteuses multiples selon la revendication 1, dans lequel le sous-module de sortie de signal numérique de porteuses multiples comprend :

des convertisseurs élévateurs numériques, chacun correspondant à l'un respectif des signaux de bande de base associés aux porteuses, configurés pour effectuer des conversions par élévation numériques respectivement sur au moins deux signaux de bande de base d'entrée associés à des porteuses de système mondial de communications mobiles, GSM et sur au moins deux signaux de bande de base associés à des porteuses de système universel de télécommunications mobiles, UMTS ;

un multiplicateur configuré pour effectuer une compensation de planéité de gain de canal analogique pour chacune des porteuses GSM sur la base d'une table de coefficients de compensation de transmission GSM ; et pour effectuer une compensation de planéité de gain de canal analogique et une compensation de puissance statique pour chacune des porteuses UMTS sur la base d'une table de coefficients de compensation de transmission UMTS et d'un réglage de puissance statique ; et

un additionneur configuré pour combiner les au moins deux signaux de bande de base compensés associés aux porteuses GSM et les au moins deux signaux de bande de base associés aux porteuses UMTS, de manière à obtenir le premier signal numérique de porteuses multiples.

4. Dispositif de commande de puissance en boucle fermée de porteuses multiples selon la revendication 1, dans lequel module de canal analogique de rétroaction comprend :

un canal de radiofréquence, RF, configuré pour décaler en fréquence le signal de sortie de porteuses multiples de manière à obtenir un signal analogique de bande de base ou de fréquence intermédiaire ; et

un convertisseur A/N configuré pour effectuer une conversion A/N sur le signal analogique de bande de base ou de fréquence intermédiaire pour obtenir le signal numérique de rétroaction de porteuses multiples et pour transmettre le signal numérique de rétroaction de porteuses multiples au module de traitement numérique de liaison descendante.

5. Procédé de commande de puissance en boucle fermée de porteuses multiples comprenant :

l'obtention (201) d'un premier signal numérique de porteuses multiples d'au moins deux signaux de bande de base d'entrée associés à des porteuses ;

l'exécution (202) d'une compensation de puissance en boucle fermée sur le premier signal numérique de porteuses multiples en utilisant un signal numérique de rétroaction de porteuses multiples de manière à obtenir un deuxième signal numérique de porteuses multiples ; et

l'obtention (203) du signal numérique de rétroaction de porteuses multiples à partir d'un signal de sortie de porteuses multiples qui est obtenu en traitant le deuxième signal numérique de porteuses multiples dans un domaine analogique,

l'exécution d'une compensation de puissance en boucle fermée sur le premier signal numérique de porteuses multiples en utilisant le signal numérique de rétroaction de porteuses multiples de manière à obtenir le deuxième signal numérique de porteuses multiples comprenant :

l'obtention d'une valeur de compensation en boucle fermée à partir de puissances de signal de la totalité des signaux de bande de base d'entrée associés aux porteuses et d'une puissance de signal du signal numérique de rétroaction de porteuses multiples ; et

la multiplication du premier signal numérique de porteuses multiples par la valeur de compensation en boucle fermée pour obtenir le deuxième signal numérique de porteuses multiples ;

dans lequel l'obtention de la valeur de compensation en boucle fermée à partir des puissances de signal de la totalité des signaux de bande de base d'entrée associés aux porteuses et de la puissance de signal du signal numérique de rétroaction de porteuses multiples comprend :

le calcul (501) d'une puissance de transmission moyenne pour chacune des porteuses en fonction d'un signal de bande de base d'entrée respectif associé à la porteuse, puis le calcul d'une somme des puissances de transmission moyennes pour la totalité des porteuses, et ensuite l'exécution d'un réglage de niveau de puissance statique, de manière à obtenir une puissance de transmission moyenne de porteuses multiples cible ;

le calcul (502) d'une puissance moyenne de rétroaction en fonction du signal numérique de rétroaction de porteuses multiples, et ensuite l'exécution d'une compensation de gain de canal de rétroaction, d'une compensation de température et d'une modification de mise à l'échelle pour obtenir une puissance moyenne de transmission de porteuses multiples effective ; et

la comparaison (503) de la puissance de transmission moyenne de porteuses multiples cible à la puissance de transmission moyenne de porteuses multiples effective, de manière à obtenir la valeur de compensation en boucle fermée.

6. Procédé de commande de puissance en boucle fermée de porteuses multiples selon la revendication 5, dans lequel l'obtention du premier signal numérique de porteuses multiples à partir d'au moins deux signaux de bande de base d'entrée associés à des porteuses comprend :

l'exécution de conversions par élévation numériques sur au moins deux signaux de bande de base d'entrée associés à des porteuses de système mondial de communications mobiles, GSM ;

l'exécution d'une compensation de planéité de gain de canal analogique pour chacune des porteuses GSM en utilisant une table de coefficients de compensation de transmission GSM ; et

la combinaison des au moins deux signaux de bande de base associés aux porteuses GSM qui ont subi les conversions par élévation numériques pour obtenir le premier signal numérique de porteuses multiples.

7. Procédé de commande de puissance en boucle fermée de porteuses multiples selon la revendication 5, dans lequel l'obtention du premier signal numérique de porteuses multiples à partir d'au moins deux signaux de bande de base d'entrée associés à des porteuses comprend :

l'exécution de conversions par élévation numériques respectivement sur au moins deux signaux de bande de base d'entrée associés à des porteuses de système mondial de communications mobiles, GSM et sur au moins deux signaux de bande de base associés à des porteuses de système universel de télécommunications mobiles, UMTS ;

l'exécution d'une compensation de planéité de gain de canal analogique pour chacune des porteuses GSM en utilisant une table de coefficients de compensation de transmission GSM ; l'exécution d'une compensation de planéité de gain de canal analogique et une compensation de puissance statique pour chacune des porteuses UMTS en utilisant une table de coefficients de compensation de transmission UMTS et une compensation de puissance statique ; et

la combinaison des au moins deux signaux de bande de base compensés associés aux porteuses GSM et les au moins deux signaux de bande de base associés aux porteuses UMTS, de manière à obtenir le premier signal numérique de porteuses multiples.

8. Procédé de commande de puissance en boucle fermée de porteuses multiples selon la revendication 5, dans lequel l'obtention du signal numérique de rétroaction de porteuses multiples à partir du signal de sortie de porteuses multiples comprend :

le décalage en fréquence du signal de sortie de porteuses multiples pour obtenir un signal analogique de bande de base ou de fréquence intermédiaire ; et

l'exécution d'une conversion A/N sur le signal analogique de bande de base ou de fréquence intermédiaire pour obtenir le signal numérique de rétroaction de porteuses multiples.

9. Procédé de commande de puissance en boucle fermée de porteuses multiples selon l'une quelconque des revendications 5 à 8, comprenant en outre :

l'exécution d'une conversion N/A, d'un décalage de fréquence et d'un réglage de niveau de puissance statique sur le deuxième signal numérique de porteuses multiples pour obtenir le signal de sortie de porteuses multiples.

10. Procédé de commande de puissance en boucle fermée de porteuses multiples selon la revendication 6, dans lequel la table de coefficients de compensation de transmission GSM fournit une compensation de planéité de gain de canal analogique pour chacune des porteuses GSM ; et la table de coefficients de compensation de transmission UMTS et le réglage de puissance statique fournissent une compensation de planéité de gain de canal analogique et une compensation de puissance statique pour chacune des porteuses UMTS.

Fig. 4

EP 2 512 192 B1

Fig. 1

```
┌──────────────┐      ┌──────────────┐      ┌─────┐
│ Baseband data │─────▶│Radio frequency│─────▶│ HPA │────▶
└──────────────┘      │   channel    │      └─────┘
                      └──────────────┘          │
                             ▲                   │
Reference power level   +    │    -              │
────────────────────▶ ⊕◀──────────┐             │
                             │     │             │
                             │  ┌──────────┐     │
                             └──│ Detection │◀────┘
                                └──────────┘
```

Fig. 2

┌────────────────────────────────────────────┐
│ Obtain a first multi-carrier digital signal │  ⟋ 201
│ according to the input two and more          │
│ baseband signals associated with the carriers│
└────────────────────────────────────────────┘
                      │
                      ▼
┌────────────────────────────────────────────┐
│ Perform closed-loop power compensation on    │  ⟋ 202
│ the first multi-carrier digital signal by using a│
│ multi-carrier feedback digital signal to obtain a│
│ second multi-carrier digital signal          │
└────────────────────────────────────────────┘
                      │
                      ▼
┌────────────────────────────────────────────┐
│ Obtain the multi-carrier feedback digital signal from│  ⟋ 203
│ a multi-carrier output signal which is obtained by   │
│ processing the second multi-carrier digital signal in│
│ the analog domain                            │
└────────────────────────────────────────────┘

Fig. 3

⟋ 301                          ⟋ 303
┌──────────────┐              ┌──────────────┐
│ Downlink digital│            │  Feedback    │
│  processing    │────────────│analog channel│
│   module       │            │   module     │
└──────────────┘              └──────────────┘

Fig. 5

```
┌─────────────────────────┐
│    Initial closed-loop   │
│  compensation value =1   │
└─────────────────────────┘
             │
             ▼
┌─────────────────────────┐
│   Calculate the ideal    │── 501
│  multi-carrier average   │
│   transmission power     │
└─────────────────────────┘
             │
             ▼
┌─────────────────────────┐
│    Calculate the actual  │── 502
│  multi-carrier average   │
│   transmission power     │
└─────────────────────────┘
             │
             ▼
┌─────────────────────────┐
│      Calculate the       │── 503
│      closed-loop         │
│   compensation value     │
└─────────────────────────┘
```

Fig. 6

Downlink analog channel module — 302

416 (antenna)
Duplexer — 415
Amplifier — 414
Attenuator — 413
Static power setting
Radio frequency channel — 412
Digital-to-analog converter — 411

Feedback analog channel module — 303
Radio frequency channel — 418
Analog-to-digital converter — 417

Downlink digital processing module — 301

407
Power calculation and compensation algorithm sub-module — 410
Feedback compensation coefficient table
Static power setting

Multi-carrier digital signal output sub-module — 420
405
409
404
GSM transmission compensation coefficient table
Digital up-converter
UMTS transmission compensation coefficient table and static power setting

baseband signal 1 associated with a GSM carrier
baseband signal 2 associated with a GSM carrier
baseband signal 1 associated with a UMTS carrier
baseband signal 2 associated with a UMTS carrier

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0001084 A1